# FASCICULE DE BREVET EUROPEEN

(11) **EP 3 594 314 B1**
(45) Date de publication et mention de la délivrance du brevet: **15.04.2026**
(21) Numéro de dépôt: 19185236.7
(22) Date de dépôt: 09.07.2019
(51) Int. Cl.: C10L 5/36, C10L 5/44, C10L 9/00

(54) **PROCEDE DE TRAITEMENT DE DECHETS VERTS**
AUFBEREITUNGSVERFAHREN VON GRÜNABFÄLLEN
METHOD FOR PROCESSING GREEN WASTE

(30) Priorité: 12.07.2018 FR 1856452
(43) Date de publication de la demande: 15.01.2020
(73) Titulaire: Mecagreen, 03500 Saint-Pourçain-sur-Sioule (FR)
(72) Inventeur: DUBOIS, PATRICK, 03500 SAINT POURCAIN SUR SIOULE (FR)
(74) Mandataire: Dennemeyer & Associates S.A.

(56) Documents cités:
- EP-A1- 3 153 566
- EP-A2- 2 418 075
- WO-A1-2014/167182
- WO-A1-2016/205355
- WO-A1-2018/095989
- WO-A2-2015/011279
- FR-A1- 3 018 078
- ANONYMOUS: "Vergleich der Hackschnitzelklassen und Spezifikationen gem�� �NORM M7133 und EN 14961-1:2010", 1 January 2016 (2016-01-01), XP93010743, Retrieved from the Internet <URL:http://www.waldammer.de/.cm4all/iproc.php/�NORM.pdf?cdp=a> [retrieved on 20221223]

## Description

La présente invention concerne un procédé de traitement des déchets verts.

Les déchets verts sont des déchets végétaux provenant des activités agricoles, forestières ou de l'entretien des espaces verts privés ou publics. Ils comprennent une partie ligneuse, en l'espèce des branches ou troncs d'arbre et une partie non ligneuse, ici les feuilles et déchets de tonte. Par la suite, on désignera également par déchets verts tout déchets ligneux tels du bois, des planches, des caisses, cagettes et palettes pour autant que ces déchets ligneux ne soient pas traités avec des produits chimiques.

Généralement, ces déchets sont utilisés comme substrat pour faire du compost. Actuellement d'autres débouchés pour les déchets verts ligneux sont envisagés car la production de compost est suffisante pour couvrir les besoins. D'un autre côté, les besoins en matière ligneuse sont importants, cela pour diverses applications dont par exemple le chauffage.

C'est dans ce contexte que la demanderesse a développé un procédé de traitement de déchets verts permettant d'utiliser la partie ligneuse des déchets verts dans la production de matière première pour la production de granulés de bois ou de buchettes pour le chauffage. De tels granulés sont également désignés par le terme anglais de pellet.

EP 241807 divulgue un procédé et un dispositif pour produire des pellets réalisés à partir de biomasse.

WO 2014167182 concerne un procédé de production de biofuel et d'utilisation de biofuel.

WO 2015011279 concerne un dispositif de production de biomasse.

FR 3018078 concerne un procédé de fabrication de granules à partir d'au moins une matière végétale humide.

WO 2016205355 concerne un procédé d'utilisation de résidus de forêts.

EP 3153566 concerne un procédé de fabrication de pellets combustibles.

WO 2018095989 concerne un procédé de fabrication de granules comprenant la récupération de vapeurs issues du broyage de la biomasse, installation associée.

La présente invention est mentionnée dans le jeu de revendications en annexe.

A cet effet, l'invention a pour objet un procédé de traitement des déchets verts destinés à une utilisation en tant que matières premières dans un procédé de fabrication de produits de chauffage à base de bois, caractérisé en ce qu'il comprend au moins les étapes suivantes :
- a) broyage primaire dit broyage lent des déchets verts jusqu'à un premier calibre G150 selon les normes EN14961 et ÖNORM M7133,
- b) criblage des éléments ligneux obtenus à l'étape a) pour obtenir un calibrage G80 selon les normes EN14961 et ÖNORM M7133 inférieur à celui de l'étape a) et pour évacuer des éléments non ligneux ne correspondant pas au calibre G80,
- c) séparation des éléments solides obtenus à l'étape précédente par différence de densité en milieu liquide, seuls les éléments solides ligneux sans impureté étant conservés pour l'étape suivante,
- d) broyage des éléments ligneux obtenus à l'étape précédente jusqu'au calibre final G20 selon la norme EN14961 en ne conservant que les éléments de calibre supérieur à G10,
- e) stockage avant utilisation des éléments ligneux obtenus à l'étape précédente.

Ainsi, le procédé objet de l'invention permet, à partir de déchets verts comportant outre une partie ligneuse, une fraction non ligneuse qui comprend des feuilles, de l'herbe, des matières non végétales comme du métal, du plastique de ne garder que la partie ligneuse et de la préparer pour une utilisation, en tant que matière première, pour d'autres procédés de valorisation, notamment la production de granulés de bois, de buchettes ou plus généralement de combustibles destinés à alimenter des appareils de chauffage, de production d'électricité, de vapeur ou autres.

Selon des aspects avantageux mais non obligatoires de l'invention, un tel procédé peut comprendre une ou plusieurs des étapes suivantes:
- après l'étape b) et avant l'étape c), on effectue lors d'une étape supplémentaire f) un séchage des éléments obtenus à l'étape b).
- Après l'étape f), on effectue, lors d'une étape g), un tamisage permettant d'évacuer les éléments de plus petit calibre et nommés fine.
- Lors du tamisage on évacue des éléments solides non ligneux et en métal non ferreux.
- Après l'étape c) et avant l'étape d), on évacue les éléments non ligneux en métal ferreux.
- Après l'étape d) et avant l'étape e), on effectue un tamisage permettant d'évacuer les éléments de plus petit calibre et nommés fine.
- Lors du tamisage on sèche les éléments ligneux.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:

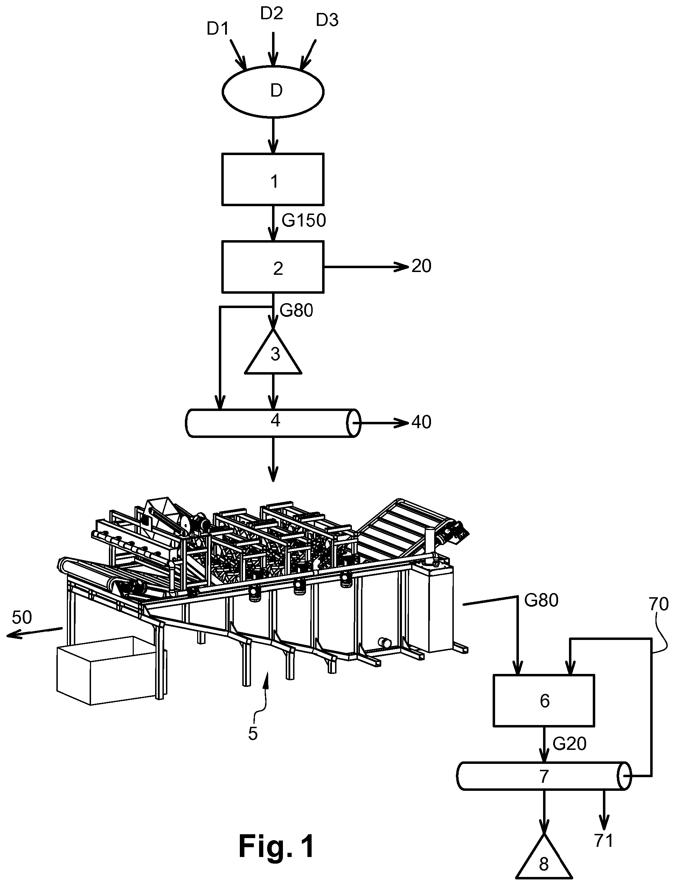

- La figure 1 est un diagramme simplifié du procédé conforme à un mode de réalisation de l'invention.

Le diagramme de la figure 1 illustre un mode de réalisation du procédé conforme à l'invention.

Les déchets verts, désignés par la lettre D, proviennent de diverses activités, privées, industrielles ou publiques. Ici, on désigne par cette expression des déchets issus de végétaux et ayant une partie ligneuse. Il s'agit par exemple, de la coupe forestière ou de l'élagage D1, de l'entretien des espaces verts privés ou publics D2 ou encore de la collecte de déchets D3 comme des caisses en bois, des cagettes en bois, des palettes en bois des planches ou plus généralement des déchets issus de l'industrie du bois. Ces différents déchets verts D sont collectés par des moyens connus en soi.

On conçoit que ces déchets verts D sont de formes et dimensions variées et qu'ils ont, fréquemment, une partie non ligneuse. Cette partie non ligneuse peut provenir soit de la procédure de collecte des déchets verts soit de l'origine et de l'usage initial de la partie ligneuse. Ainsi, on trouve comme partie non ligneuse des polymères, du métal, de l'herbe, de la céramique, de la terre cuite, des pierres, des déchets organiques ou d'autres matériaux.

A partir de ces déchets verts D hétérogènes, la première étape consiste à réduire la taille des déchets verts D, de sorte à obtenir une taille homogène. En l'espèce, l'étape référencée 1 est un broyage primaire dit broyage lent. On conçoit que l'étape 1 est effectuée à l'aide d'au moins un broyeur. Un tel broyage s'effectue à une vitesse généralement inférieure à 50 tours/min. En variante, il s'agit d'un autre type de broyage, selon la nature des déchets verts à broyer. Cette étape 1 permet de réduire les dimensions initiales des déchets verts D de sorte à obtenir, par exemple, des éléments de calibre G150 selon la norme européenne EN14961 et selon la norme autrichienne ÖNORM M7133 sur le bois déchiqueté. En l'espèce, les éléments de calibre G150 ont une surface inférieure à 15 cm2.

Par la suite, il sera fait référence à ces documents normatifs concernant la définition des calibres sur le bois déchiqueté. SI besoin, d'autres documents normatifs ou de références réglementaires sont utilisés, selon les besoins, pour autant que le principe de définir une surface, donc des dimensions, afin d'avoir un type de produit dimensionnellement homogène soit respecté.

Ensuite, un criblage 2 est réalisé, afin de réduire la taille des éléments jusqu'au calibre G80, donc avec une surface inférieure à 8 cm2. En variante non illustrée, selon les besoins, la réduction est faite selon un autre calibre défini, à avoir soit un calibre inférieur à G80, soit un calibre compris entre G80 et G150.

Pour mémoire, un criblage est une opération de séparation selon leurs tailles des éléments. Le criblage s'effectue, généralement, par passage dans des grilles de tamisage de diamètre de passage défini.
Ici, le criblage 2 permet de séparer les éventuelles feuilles et/ou herbe présentes ainsi que certains éléments non organiques comme des métaux. L'ensemble de ces éléments non ligneux 20 sont évacués pour un traitement ultérieur, ce traitement pouvant être un traitement ultime ou une autre utilisation, par exemple un compostage dans le cas de feuilles et/ou d'herbe.

A l'issue du criblage, les éléments de calibre G80 sont, si besoin, sécher lors d'une étape 3 optionnelle. Le séchage s'effectue soit naturellement à l'air soit dans au moins une enceinte chauffée, cela de manière connue en soi. Le but de cette étape 3 est de ramener le taux d'humidité des éléments de calibre G80 à un taux d'humidité défini. Ici, le taux d'humidité défini est au voisinage de 20%. En variante, le taux d'humidité défini est différent.

On conçoit aisément que cette étape 3 n'est nécessaire que si le taux d'humidité est supérieur à celui défini. Pour cela, on effectue, avantageusement, une mesure du taux d'humidité sur les éléments criblés.

Les éléments de calibre G80, soit à l'issue du séchage à l'étape 3 soit directement en sortie du criblage 2 s'ils sont secs sont, comme illustré à la figure 1, dirigés, avantageusement, vers au moins un tamis cylindrique rotatif à alimentation interne 4. Un tel tamis est désigné couramment par le terme allemand trommel. Ce terme sera préférentiellement employé par la suite.

L'objet de cette étape est de séparer les éléments, ici de calibre G80, obtenus précédemment pour évacuer, par un jeu de grilles de tamisage adaptés, de plus petits éléments de calibre G10, d'une surface maximale de 1cm2, désignés sous le terme de fine et qui sont présents avec les éléments de calibre G80, sans toutefois être liés à ces derniers. Ainsi, l'étape 4 est de facto optionnelle, si les éléments de calibre G80 issus du criblage sont les seuls présents ou du moins si les éléments de calibre G10 sont en quantité négligeable. Ces éléments de calibre G10 sont évacués, selon la flèche 40, vers un stockage, un traitement en déchets ultimes ou une autre utilisation.

Avantageusement le trommel 4 est équipé d'un organe adapté pour évacuer également des matières non ligneuses telles que des matières plastiques ou de métaux non ferreux de petites tailles. Pour cela, le trommel est, par exemple, équipé d'un filtre électrostatique et/ou d'une aspiration.

Les éléments de calibre G80 débarrassés de la fine sont dirigés vers une étape de séparation des éléments solides par différence de densité en milieu liquide. Cette étape est effectuée avec au moins un séparateur 5. Un tel séparateur 5 est adapté pour assurer l'avance et le brassage des solides de calibre G80 dans le liquide, par exemple de l'eau, afin de débarrasser de toute impureté les éléments ligneux. En d'autres termes, la terre, le sable, les pierres et plus généralement tous les petits éléments non ligneux ayant une densité supérieure à celle du liquide qui sont encore présents sur les éléments de calibre G80, et physiquement liés à eux, sont séparés de ceux-ci par flottaison, donc de facto par lavage de la matière, et évacués, selon la flèche 50, pour un autre traitement, un stockage ou une autre utilisation.

Le séparateur 5 est adapté pour assurer une séparation et un nettoyage en continu avec un temps de séjour des éléments dans le séparateur 5 le plus court possible tout en étant le plus efficace. A titre d'exemple non limitatif, le temps de séjour est inférieur à 30 secondes. Ainsi, on limite le mouillage des éléments lors de leur passage dans le liquide du séparateur. Typiquement, le taux d'humidité des éléments de calibre G80 en sortie du séparateur 5, une fois ces derniers débarrassés des impuretés est au maximum de 35%. En d'autres termes, le passage des éléments de calibre G80 dans le liquide n'a induit qu'une humidification de la surface des éléments et non en profondeur, le liquide n'ayant pas eu le temps de pénétrer au cœur de la matière ligneuse.

Il convient ensuite, lors d'une étape 6, de broyer les éléments ligneux de calibre G80 ainsi nettoyés jusqu'à l'obtention du calibre souhaité, par exemple un calibre G20, soit une surface maximale de 2 cm2 dans le cas d'obtention de plaquettes de bois, de buchettes, de granulés de bois ou autres destinés à la production de combustibles ligneux pour appareils de chauffage ou autres. Pour cela, le broyage de l'étape 6 est soit de type lent soit rapide, avec des grilles de calibrage adaptées.

Avantageusement, entre le séparateur 5 et l'étape 6 de broyage, les éléments passent sur un tapis de convoyage, non illustré, équipé d'un électroaimant afin de collecter les résidus métalliques ferreux encore présents. Il est à noter que si des agrafes et/ou des clous ou vis sont pris dans l'élément, l'ensemble de l'élément sera évacué par ce dispositif.

A l'issue du broyage de l'étape 6, les éléments du calibre souhaité, donc ici le calibre G20, sont dirigés vers au moins un tamis rotatif circulaire ou trommel 7. Il peut arriver que les éléments obtenus à l'issue du broyage 6 soient utilisables tels quels, soit par destination soit parce qu'il y a peu ou pas de fine présente.

Le trommel 7 est, dans l'exemple, différent du trommel 4 en ce qu'il comprend plus de deux éléments de tamisage. En variante, les trommels 4 et 7 sont similaires. Le trommel 7 permet de séparer la fine, donc les éléments inférieur au calibre G10, comme avec le trommel 4, et de récupérer non seulement les éléments de calibre G20 de type plaquettes mais éventuellement des éléments d'un autre calibre, compris entre G10 et G20 et/ou d'un autre type que des plaquettes, selon les besoins.

Dans tous les cas, les éléments d'un calibre supérieur à G20 repartent, selon la flèche 70, au broyage 6, alors que la fine inférieure au calibre G10 est évacuée, selon la flèche 71, pour un stockage, un traitement ultime ou une autre utilisation.

Avantageusement, le trommel 7 est équipé, en un ou plusieurs zones du trommel 7, d'au moins un dispositif d'injection d'air chaud, afin d'obtenir un taux d'humidité le plus proche possible de celui désiré pour l'utilisation des éléments ligneux de calibre G20.

L'étape suivante, référencée 8, consiste soit en un stockage en silo ou en benne, avant l'utilisation des éléments ligneux ainsi obtenus dans un procédé de fabrication de granulés de chauffage, de buchettes, de plaquettes ou autres combustibles. On conçoit que, si besoin, une étape supplémentaire de séchage est effectuée lors du stockage, afin de ramener et/ou maintenir le taux d'humidité à la valeur souhaitée pour la transformation et/ou utilisation suivantes des éléments ligneux.

De même, le temps de stockage peut être proche de zéro lorsque les éléments ligneux de calibre G20 sont directement introduits dans un procédé de fabrication de granulés de bois, buchettes, plaquettes ou autres produits similaires.

Lors des différentes étapes, des mesures du taux d'humidité et d'autres paramètres physico-chimiques, par exemple la température, le pH, sont effectuées.

Le transfert des éléments entre les appareils assurant les diverses étapes est avantageusement effectué de manière automatisée par des convoyeurs à bande ou à godet. Les différentes étapes sont gérées à partir d'un module de commande. Celui-ci peut être distant de l'installation et il est, avantageusement, pilotable à distance, par exemple, via un ordinateur ou un smartphone. En variante, l'ensemble des étapes du procédé est automatisé.

Dans un autre mode de réalisation, plusieurs appareils assurant les diverses étapes sont disposés, soit en parallèle soit en série, selon les besoins.

En variante, les différentes étapes du procédé sont effectuées dans une installation mobile, soit montée sur un véhicule automoteur ou non, soit adaptée pour être transportée par container.

## Revendications

1. Procédé de traitement des déchets verts (D) destinés à une utilisation en tant que matières premières dans un procédé de fabrication de produits de chauffage à base de bois, **caractérisé en ce qu'**il comprend au moins les étapes suivantes :
- a) broyage (1) primaire dit broyage lent des déchets verts (D) jusqu'à un premier calibre G150 selon les normes EN14961 et ÖNORM M7133,
- b) criblage (2) des éléments ligneux obtenus à l'étape a) pour obtenir un calibrage G80 selon la norme EN14961 inférieur à celui de l'étape a) et évacuer des éléments non ligneux (20) ne correspondant pas au calibre G80,
- c) séparation (5) des éléments solides obtenus à l'étape précédente par différence de densité en milieu liquide, seuls les éléments solides ligneux sans impureté étant conservés pour l'étape suivante,
- d) broyage (6) des éléments ligneux obtenus à l'étape précédente jusqu'au calibre final G20 selon les normes EN14961 et ÖNORM M7133 en ne conservant que les éléments de calibre supérieur à G10,
- e) stockage (8) avant utilisation des éléments ligneux obtenus à l'étape précédente.

2. Procédé selon la revendication 1, **caractérisé en ce qu'**après l'étape b) et avant l'étape c), on effectue lors d'une étape supplémentaire f) un séchage (3) des éléments obtenus à l'étape b).

3. Procédé selon la revendication 2, **caractérisé en ce qu'**après l'étape f), on effectue, lors d'une étape supplémentaire g), un tamisage (4) permettant d'évacuer les éléments de plus petit calibre et nommés fine.

4. Procédé selon la revendication 3, **caractérisé en ce que** lors du tamisage (4) on évacue des éléments solides non ligneux et en métal non ferreux.

5. Procédé selon la revendication 1, **caractérisé en ce qu'**après l'étape c) et avant l'étape d), on évacue les éléments non ligneux en métal ferreux.

6. Procédé selon la revendication 1, **caractérisé en ce qu'**après l'étape d) et avant l'étape e), on effectue un tamisage (7) permettant d'évacuer les éléments de plus petit calibre et nommés fine.

7. Procédé selon la revendication 6, **caractérisé en ce que** lors du tamisage (7) on sèche les éléments ligneux.

## Patentansprüche

1. - Verfahren zur Behandlung von Grünabfällen (D), die für eine Verwendung als Rohstoffe in einem Verfahren zur Herstellung von Heizprodukten auf Holzbasis bestimmt sind, **dadurch gekennzeichnet, dass** dieses mindestens die folgenden Schritte umfasst:
- a) primäre Zerkleinerung (1), die als langsame Zerkleinerung von Grünabfällen (D) bezeichnet wird, bis zu einer ersten Korngröße G150 nach den Normen EN14961 und ÖNORM M7133,
- b) grobes Sieben (2) der in Schritt a) erhaltenen holzigen Bestandteile, um eine Körnung G80 nach der Norm EN14961 zu erhalten, die kleiner als diejenige in Schritt a) ist, und um nicht holzige Bestandteile (20), die nicht der Korngröße G80 entsprechen, zu entfernen,
- c) Trennung (5) der im vorherigen Schritt erhaltenen festen Bestandteile nach Dichteunterschied in flüssiger Umgebung, wobei nur die festen holzigen Bestandteile ohne Verunreinigung für den nächsten Schritt behalten werden,
- d) Zerkleinerung (6) der im vorherigen Schritt erhaltenen holzigen Bestandteile auf die endgültige Korngröße G20 nach den Normen EN14961 und ÖNORM M7133, indem nur die Bestandteile mit einer Korngröße von mehr als G10 behalten werden,
- e) Lagerung (8) vor der Verwendung der im vorherigen Schritt erhaltenen holzigen Bestandteile.

2. - Verfahren nach Anspruch 1, **dadurch gekennzeichnet, dass** nach Schritt b) und vor Schritt c) während eines zusätzlichen Schritts f) eine Trocknung (3) der in Schritt b) erhaltenen Bestandteile durchgeführt wird.

3. - Verfahren nach Anspruch 2, **dadurch gekennzeichnet, dass** nach Schritt f) während eines zusätzlichen Schritts g) ein feines Sieben (4) durchgeführt wird, welches es ermöglicht, die kleineren Bestandteile mit kleinerer Korngröße, die Feinanteil genannt werden, zu entfernen.

4. - Verfahren nach Anspruch 3, **dadurch gekennzeichnet, dass** während des feinen Siebens (4) feste, nicht holzige Bestandteile aus Nichteisenmetall entfernt werden.

5. - Verfahren nach Anspruch 1, **dadurch gekennzeichnet, dass** nach Schritt c) und vor Schritt d) die nicht holzigen Bestandteile aus Eisenmetall entfernt werden.

6. - Verfahren nach Anspruch 1, **dadurch gekennzeichnet, dass** nach Schritt d) und vor Schritt e) ein feines Sieben (7) durchgeführt wird, das es ermöglicht, die Bestandteile mit kleinerer Korngröße, die Feinanteil genannt werden, zu entfernen.

7. - Verfahren nach Anspruch 6, **dadurch gekennzeichnet, dass** die holzigen Bestandteile während des feinen Siebens (7) getrocknet werden.

## Claims

1. - A method for treatment of green wastes (D) intended for use as raw materials in a production method for wood-based heating products, **characterized in that** it comprises at least the following steps:
- a) primary shredding (1), called slow shredding of green wastes (D), to a first chip grade G150 according to the EN 14961 and ÖNORM M7133 standards;
- b) screening (2) the ligneous elements resulting from step a) to get a chip grading G80, according to the EN 14961 standard, lower than that of step a), and to remove the non-ligneous elements (20) not corresponding to the chip grade G80;
- c) separating (5) the solid elements obtained in the preceding step by density difference in a liquid medium, where only the solid ligneous elements without impurities are retained for the following step;
- d) shredding (6) the ligneous elements obtained in the preceding step down to the final chip grade G20 according to the EN 14961 and ÖNORM M7133 standards while only keeping the elements with chip grade over G10;
- e) storing (8) the ligneous elements obtained in the preceding step before use.

2. - The method, according to claim 1, **characterized in that**, after step b) and before step c), drying (3) of the elements obtained in step b) is done during a supplemental step f).

3. - The method, according to claim 2, **characterized in that**, after step f), sifting (4) serving to remove the smallest grade elements, which are called fines, is done during a supplemental step g).

4. - The method, according to claim 3, **characterized in that**, during sifting (4), the non-ligneous and non-ferrous metal solid elements are removed.

5. - The method, according to claim 1, **characterized in that**, after step c) and before step d), the non-ligneous and ferrous metal elements are removed.

6. - The method, according to claim 1, **characterized in that**, after step d) and before step e), sifting (7) serving to evacuate the smallest grade elements, which are called fines, is done.

7. - The method, according to claim 6, **characterized in that**, during sifting (7), the ligneous elements are dried.
